# EUROPEAN PATENT APPLICATION

(11) **EP 2 211 304 A2**
(43) Date of publication of application: **28.07.2010**
(21) Application number: 10000479.5
(22) Date of filing: 19.01.2010
(51) Int. Cl.: G06T 3/40

(54) **Image processing apparatus**

(30) Priority: 20.01.2009 JP 2009010339
(71) Applicant: SANYO Electric Co., Ltd., Moriguchi-shi Osaka 570-8677 (JP)
(72) Inventor: Kurokawa, Mitsuaki, Moriguchi-shi, Osaka (JP); Ohno, Masafumi, Moriguchi-shi, Osaka (JP)
(74) Representative: Glawe, Delfs, Moll

(57) **Abstract**

An image processing apparatus includes a plurality of dividers which fetch an original image in which a plurality of original pixels, each of which has any one of R, G, and B, are arrayed in a Bayer manner. A first color separating system and a second color separating system perform a color interpolating process on the fetched original image so as to create an interpolated image formed by a plurality of interpolated pixels, each of which has two colors. A first zoom system and a second zoom system perform a zoom process on the interpolated image created by the first color separating system and the second color separating system so as to create a zoom image in which a plurality of zoom pixels, each of which has any one of R, G, and B, are arrayed in a Bayer manner.

## Description

### CROSS REFERENCE OF RELATED APPLICATION

The disclosure of Japanese Patent Application No. 2009-10339, which was filed on January 20, 2009, is incorporated herein by reference.

### BACKGROUND OF THE INVENTION

### Field of the Invention

The present invention relates to an image processing apparatus. More particularly, the present invention relates to an image processing apparatus which creates a zoom image having a desired zoom magnification based on an original image in which a plurality of pixels, each of which has any one of a plurality of colors, are arrayed in a predetermined manner.

### Description of the Related Art

According to one example of this type of apparatus, a scaling parameter corresponding to an electronic zoom magnification instructed by a zoom key is set to a RAW data-use scaling circuit The RAW data-use scaling circuit performs a scaling process (zoom process) that is with reference to the scaling parameter, on RAW data outputted from an A/D converter. The RAW data on which the scaling process is performed is recorded on a recording medium in a compressed state.

However, the data on which the scaling process is performed is the RAW data, and thus, each of a plurality of pixels has only any one of color information, i.e., R(Red), G(Green), and B(Blue). Moreover, the RAW data corresponds to a Bayer array of primary colors, and thus, colors of the adjacent two pixels differ from each other both in a vertical direction and a horizontal direction. Furthermore, the scaling process is a process for weighting the color information of such pixels and adding the results. Therefore, in the above-described apparatus, it is probable that the quality of the RAW data on which the scaling process is performed is deteriorated.

Therefore, a primary object of the present invention is to provide an image processing apparatus capable of improving the quality of an image on which a zoom process is performed.

### SUMMARY OF THE INVENTION

An image processing apparatus according to the present invention, comprises: a fetcher which fetches an original image in which a plurality of original pixels, each of which has any one of M (M: an integer of 3 or more) colors, are arrayed in a predetermined manner, an interpolated image creator which performs a color interpolating process on the original image fetched by the fetcher so as to create an interpolated image formed by a plurality of interpolated pixels, each of which has N (N: an integer of 2 or more and less than the M) colors; and a zoom image creator which performs a zoom process on the interpolated image created by the interpolated image creator so as to create a zoom image in which a plurality of zoom pixels, each of which has any one of the M colors, are arrayed in the predetermined manner.

The fetcher fetches original image in which a plurality of original pixels, each of which has any one of M (M: an integer of 3 or more) colors, are arrayed in a predetermined manner. The interpolated image creator performs a color interpolating process on the original image fetched by the fetcher so as to create an interpolated image formed by a plurality of interpolated pixels, each of which has N (N: an integer of 2 or more and less than the M) colors. The zoom image creator performs a zoom process on the interpolated image created by the interpolated image creator so as to create a zoom image in which a plurality of zoom pixels, each of which has any one of the M colors, are arrayed in the predetermined manner.

Because the interpolated image is created by the color interpolating process for the original image, the interpolated image has more color information than the original image. The zoom image is created by the zoom process for such an interpolated image. Thereby, the quality of the zoom image is improved

Moreover, the zoom image has the same color array as that of the original image, and each pixel forming the interpolated image has one portion of the colors. The interpolated image is created by the color interpolating process for the original image, and the zoom image is created by the zoom process for the interpolated image. Thereby, it becomes possible to inhibit a circuit scale.

Preferably, an array of the predetermined manner includes a first partial array to which a first original pixel column intermittently having original pixels of a first color and a second pixel column intermittently having original pixels of a second color are allocated in a predetermined order, and the interpolated pixel creator includes a first interpolated-image creator which creates a first interpolated image to which a first interpolated-pixel column continuously having interpolated pixels of the first color and a second interpolated-pixel column continuously having interpolated pixels of the second color are allocated in the predetermined order, based on the original pixels of the first color and the original pixels of the second color.

In a certain aspect, the zoom image creator includes a first zoom-image creator which creates a first zoom image having the first partial array based on the first interpolated image created by the first interpolated-image creator.

In other aspect, the array of the predetermined manner includes a second partial array intermittently having original pixels of a third color in a column direction and a row direction, and the interpolated image creator further includes a second interpolated-image creator which creates a second interpolated image to which the interpolated pixels of the third color are continuously allocated in the column direction and the row direction, based on the original pixels of the third color.

In a certain embodiment, the zoom image creator includes a second zoom-image creator which creates a second zoom image having the second partial array based on the second interpolated image created by the second interpolated-image creator.

In another aspect, each of the first original pixel column and the second original pixel column is equivalent to a column extending in a vertical direction, the fetcher simultaneously fetches P (P: an integer of 2 or more) original pixels continued in a horizontal direction, and the zoom image creator includes a horizontal zoom processor which performs a horizontal zoom process in a parallel manner, on the P interpolated pixels continued in the horizontal direction.

Preferably, further comprised is an imager which has an imaging surface capturing an object scene and which repeatedly outputs the original image.

Preferably, the M colors are equivalent to three primary colors, and the array of the predetermined manner is equivalent to a Bayer array.

Preferably, further comprised is a convertor which converts the zoom image created by the zoom image creator, into an image in which each pixel has all the M colors.

The above described features and advantages of the present invention will become more apparent from the following detailed description of the embodiment when taken in conjunction with the accompanying drawings.

### BRIEF DESCRIPTION OF THE DRAWINGS

Figure 1 is a block diagram showing a configuration of one embodiment of the present invention;
Figure 2 is a block diagram showing one example of a configuration of a color filter applied to the embodiment in Figure 1;
Figure 3(A) is an illustrative view showing one example of a resolution of an image outputted from an image sensor;
Figure 3(B) is an illustrative view showing one example of a resolution of an EIS/AF evaluation image;
Figure 3(C) is an illustrative view showing one example of a resolution of an AE/AWB evaluation image;
Figure 4 is a graph showing one example of a relationship between a magnification set for a zoom process and a magnification of a displayed image;
Figure 5 is a block diagram showing one example of a configuration of an image sensor applied to the embodiment in Figure 1;
Figure 6 is a block diagram showing one example of a configuration of a pre-processing circuit applied to the embodiment in Figure 1;
Figure 7 is a block diagram showing one example of a configuration of a zoom circuit applied to the embodiment in Figure 6;
Figure 8(A) is an illustrative view showing one example of a cutting-out pattern for an input pixel;
Figure 8(B) is an illustrative view showing another example of the cutting-out pattern for an input pixel;
Figure 8(C) is an illustrative view showing still another example of the cutting-out pattern for an input pixel;
Figure 8(D) is an illustrative view showing yet still another example of the cutting-out pattern for an input pixel;
Figure 8(E) is an illustrative view showing one example of a color separating process for a G pixel;
Figure 8(F) is an illustrative view showing another example of the color separating process for a G pixel;
Figure 8(G) is an illustrative view showing still another example of the color separating process for a G pixel;
Figure 8(H) is an illustrative view showing yet still another example of the color separating process for a G pixel;
Figure 8(I) is an illustrative view showing one example of an interpolated G pixel created by a color separation;
Figure 8(J) is an illustrative view showing another example of the interpolated G pixel created by a color separation;
Figure 8(K) is an illustrative view showing still another example of the interpolated G pixel created by a color separation;
Figure 8(L) is an illustrative view showing yet still another example of the interpolated G pixel created by a color separation;
Figure 9(A) is an illustrative view showing one example of a cutting-out pattern for an input pixel;
Figure 9(B) is an illustrative view showing another example of a cutting-out pattern for an input pixel;
Figure 9(C) is an illustrative view showing still another example of the cutting-out pattern for an input pixel;
Figure 9(D) is an illustrative view showing yet still another example of the cutting-out pattern for an input pixel;
Figure 9(E) is an illustrative view showing one example of a color separating process for a G pixel;
Figure 9(F) is an illustrative view showing another example of the color separating process for a G pixel;
Figure 9(G) is an illustrative view showing still another example of the color separating process for a G pixel;
Figure 9(H) is an illustrative view showing yet still another example of the color separating process for a G pixel;
Figure 9(I) is an illustrative view showing one example of an interpolated G pixel created by a color separation;
Figure 9(J) is an illustrative view showing another example of the interpolated G pixel created by a color separation;
Figure 9(K) is an illustrative view showing still another example of the interpolated G pixel created by a color separation;
Figure 9(L) is an illustrative view showing yet still another example of the interpolated G pixel created by a color separation;
Figure 10(A) is an illustrative view showing one portion of the interpolated G pixel;
Figure 10(B) is an illustrative view showing one portion of an H zoom G pixel;
Figure 10(C) is an illustrative view showing one portion of an HV zoom G pixel corresponding to channels CH1 and CH2;
Figure 10(D) is an illustrative view showing one portion of an HV zoom G pixel corresponding to channels CH3 and CH4;
Figure 11(A) is an illustrative view showing one example of a cutting-out pattern for an input pixel;
Figure 11(B) is an illustrative view showing another example of the cutting-out pattern for an input pixel;
Figure 11(C) is an illustrative view showing still another example of the cutting-out pattern for an input pixel;
Figure 11(D) is an illustrative view showing yet still another example of the cutting-out pattern for an input pixel;
Figure 11(E) is an illustrative view showing one example of a color separating process for an R pixel;
Figure 11(F) is an illustrative view showing another example of the color separating process for a B pixel;
Figure 11(G) is an illustrative view showing another example of a color separating process for an R pixel;
Figure 11(H) is an illustrative view showing another example of a color separating process for a B pixel;
Figure 11(I) is an illustrative view showing one example of an interpolated R pixel created by a color separation;
Figure 11(J) is an illustrative view showing one example of an interpolated B pixel created by a color separation;
Figure 11(K) is an illustrative view showing another example of the interpolated R pixel created by a color separation;
Figure 11(L) is an illustrative view showing another example of the interpolated B pixel created by a color separation;
Figure 12(A) is an illustrative view showing one example of a cutting-out pattern for an input pixel;
Figure 12(B) is an illustrative view showing another example of the cutting-out pattern for an input pixel;
Figure 12(C) is an illustrative view showing still another example of the cutting-out pattern for an input pixel;
Figure 12(D) is an illustrative view showing yet still another example of the cutting-out pattern for an input pixel;
Figure 12(E) is an illustrative view showing one example of the color separating process for an R pixel;
Figure 12(F) is an illustrative view showing one example of the color separating process for a B pixel;
Figure 12(G) is an illustrative view showing another example of the color separating process for an R pixel;
Figure 12(H) is an illustrative view showing another example of the color separating process for a B pixel;
Figure 12(I) is an illustrative view showing one example of an interpolated R pixel created by a color separation;
Figure 12(J) is an illustrative view showing one example of an interpolated B pixel created by a color separation;
Figure 12(K) is an illustrative view showing another example of the interpolated R pixel created by a color separation;
Figure 12(L) is an illustrative view showing another example of the interpolated B pixel created by a color separation;
Figure 13(A) is an illustrative view showing one portion of an interpolated R pixel and an interpolated B pixel;
Figure 13(B) is an illustrative view showing another portion of the interpolated R pixel and the interpolated B pixel;
Figure 13(C) is an illustrative view showing one portion of an H zoom R pixel and an H zoom B pixel;
Figure 13(D) is an illustrative view showing another portion of the H zoom R pixel and the H zoom B pixel;
Figure 14(A) is an illustrative view showing one portion of an HV zoom R pixel and an HV zoom B pixel corresponding to channels CH1 and CH2;
Figure 14(B) is an illustrative view showing one portion of an HV zoom R pixel and an HV zoom B pixel corresponding to channels CH3 and CH4;
Figure 15(A) is an illustrative view showing one portion of an HV zoom G pixel corresponding to the channels CH1 to CH4;
Figure 15(B) is an illustrative view showing one portion of an HV zoom R pixel and an HV zoom B pixel corresponding to the channels CH1 to CH4; and
Figure 15(C) is an illustrative view showing one portion of RAW data on which a zoom process is performed.

### DETAILED DESCRIPTION OF THE PREFERRED EMBODIMENT

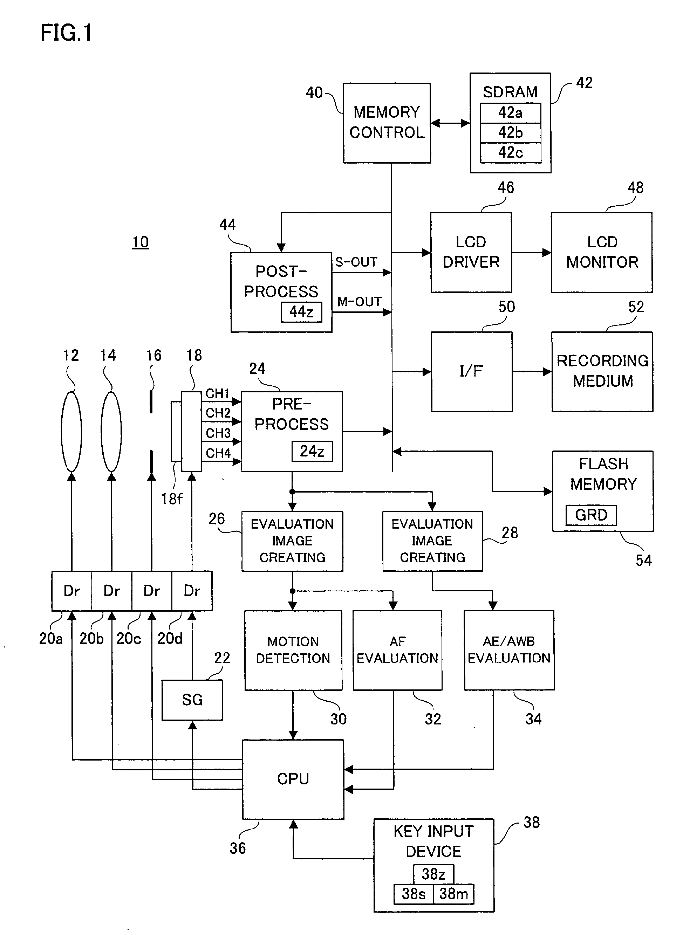

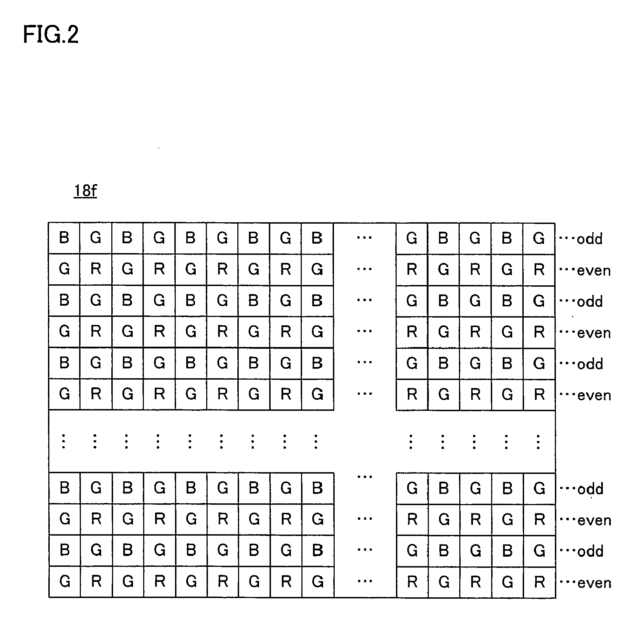

With reference to Figure 1, a digital camera 10 according to this embodiment includes a zoom lens 12, a focus lens 14, and an aperture unit 16 respectively driven by drivers 20a, 20b, and 20c. An optical image of an object scene is irradiated onto an imaging surface of a CMOS-type image sensor 18 through these members. The imaging surface is provided with an effective pixel area equivalent to horizontal 3072 pixels×vertical 1728 pixels, and is covered with a color filter 18f in a Bayer array of primary colors shown in Figure 2. Electric charges produced in each pixel have any one of color information, i.e., R (Red), G (Green), and B (Blue).

When a power supply is inputted, a CPU 36 applies a corresponding command to a driver 20d in order to execute a through-image process. The driver 20d exposes the imaging surface in response to a vertical synchronization signal Vsync generated for each 1/30 seconds from an SG (Signal Generator) 22, and reads out the electric charges produced thereby from the imaging surface. The image sensor 18 has four channels CH1 to CH4, and raw image data (original image data) based on the read-out electric charges are outputted dispersively (in a parallel manner) from the channels CH1 to CH4.

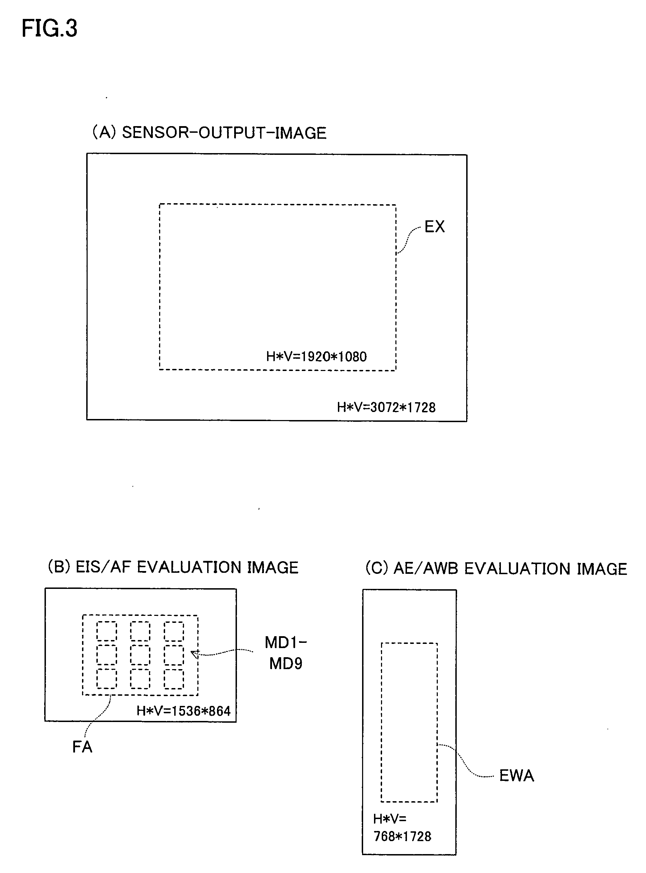

The outputted raw image data has a resolution of horizontal 3072 pixels × vertical 1728 pixels, as shown in Figure 3(A). Moreover, as is seen from Figure 2, the raw image data to be outputted has G pixels and B pixels alternately placed in horizontal lines at odd numbers, and has R pixels and G pixels alternately placed in horizontal lines at even numbers.

A pre processing circuit 24 respectively performs a parallel pre-process of four systems on the 4-channel raw image data outputted from the image sensor 18. The pre process of each system is configured by a noise removal, a reduction zoom, and an edge adjustment, and the raw image data (zoom image data) that has undergone such a pre-process is written into a raw image area 42a of an SDRAM 42 through a memory control circuit 40.

It is noted that the reduction zoom in the pro-processing circuit 24 is executed by a zoom circuit 24z. Below, the reduction zoom executed by the zoom circuit 24z is defined as "RAW zoom".

The raw image data (resolution: horizontal 3072 pixels × vertical 1728 pixels) from which the noise is removed by the pre-processing circuit 24 is also applied to evaluation-image creating circuits 26 and 28. The evaluation-image creating circuit 26 performs a process for adding vertical two pixels each other to the applied raw image data and a process for adding horizontal two pixels each other to the same so as to create EIS/AF evaluation image data. On the other hand, the evaluation-image creating circuit 28 performs a process for adding horizontal four pixels each other to the applied raw image data so as to create AE/AWB evaluation image data.

The EIS/AF evaluation image data has a resolution of horizontal 1536 pixels × vertical 864 pixels, as shown in Figure 3(B). The AE/AWB evaluation image data has a resolution of horizontal 768 pixels × vertical 1728 pixels, as shown in Figure 3(C). The EIS/AF evaluation image data is applied to a motion detecting circuit 30 and an AF evaluating circuit 32, and the AE/AWB evaluation image data is applied to an AE/AWB evaluating circuit 34.

With reference to Figure 3(A) and Figure 3(B), one extraction area EX and nine motion detection areas MD1 to MD9 are allocated to the imaging surface. The extraction area EX has a size equivalent to horizontal 1920 pixels × vertical 1080 pixels. Furthermore, the motion detection areas MD 1 to MD3 are lined up in a horizontal direction at an upper level of the imaging surface, the motion detection areas MD4 to MD6 are lined up in a horizontal direction at a middle level of the imaging surface, and the motion detection areas MD7 to MD9 are lined up in a horizontal direction at a lower level of the imaging surface.

The motion detecting circuit 30 detects a partial motion vector representing motion of the object scene in each of the motion detection areas MD 1 to MD9 based on the EIS/AF evaluation image data, and combines together the detected partial motion vectors so as to create a total motion vector. Both the process for detecting the partial motion vectors and the process for creating the total motion vector are executed at each generation of the vertical synchronization signal Vsync.

Based on the total motion vector outputted from the motion detecting circuit 30, the CPU 36 determines which one of two factors, i.e., a camera shake and a pan/tilt operation, causes the motion of the imaging surface in a direction orthogonal to an optical axis. When the motion of the imaging surface is caused due to the camera shake, the CPU 36 moves the extraction area EX along the total motion vector. A position of the extraction area EX is changed so that the motion of the imaging surface caused due to the camera shake is compensated (offset). It is noted that a focus area FA and a photometric/white balance area EWA described later are moved along with the movement of the extraction area EX.

A post-processing circuit 44 reads out the partial raw image data belonging to the extraction area EX, out of the raw image data accommodated in the raw image area 42a, through the memory control circuit 40, and performs post-processes, such as a color separation, a white balance adjustment, a YUV conversion, and an enlargement zoom, on the read-out partial raw image data. The partial raw image data is read out from the raw image area 42a in response to the vertical synchronization signal Vsync, and the post-process is executed also in response to the vertical synchronization signal Vsync. The thus-produced image data of a YUV format is outputted from a moving-image output terminal M_OUT, and written into a moving image area 42b of the SDRAM 42 through the memory control circuit 40.

It is noted that each of a plurality of pixels forming the image data on which the color separating process is performed in the post-processing circuit 44 has all color information of R, G, and B. The format of such image data is converted to a YUV format by the YUV conversion, and the enlargement zoom is further performed thereon. In addition, the enlargement zoom in the post-processing circuit 44 is executed by a zoom circuit 44z. Below, the enlargement zoom executed by the post-processing circuit 44 is defined as "YUV zoom".

An LCD driver 46 repeatedly reads out the image data accommodated in the moving image area 42b, and drives an LCD monitor 48 based on the read-out image data. As a result, a real-time moving image (through image) representing the object scene is displayed on a monitor screen.

The AE/AWB evaluating circuit 34 integrates one portion of the AE/AWB evaluation image data belonging to a photometric/white balance area EWA shown in Figure 3(C), out of the AE/AWB evaluation image data outputted from the evaluation-image creating circuit 28, at each generation of the vertical synchronization signal Vsync, and outputs an integral value, i.e., an AE/AWB evaluation value. The CPU 36 executes an AE/AWB process in order to calculate an appropriate EV value and an appropriate white balance adjustment gain based on the AE/AWB evaluation value outputted from the AE/AWB evaluating circuit 34. An aperture amount and an exposure time period that define the calculated appropriate EV value are set to the drivers 20c and 20d, respectively, and the calculated appropriate white balance adjustment gain is set to the post-processing circuit 44. As a result, a brightness and a white balance of the moving image outputted from the LCD monitor 48 are moderately adjusted

The AF evaluating circuit 32 extracts one portion of the EIS/AF evaluation image data belonging to the focus area FA shown in Figure 3(B), out of the EIS/AF evaluation image data outputted from the evaluation-image creating circuit 26, and integrates a high-frequency component of the extracted EIS/AF evaluation image data in response to the vertical synchronization signal Vsync. The calculated integral value, i.e., the AF evaluation value, is applied to the CPU 36 for a continuous AF process. The CPU 36 refers to the applied AF evaluation value so as to continually search a focal point by a so-called hill-climbing process. The focus lens 14 is placed at the discovered focal point.

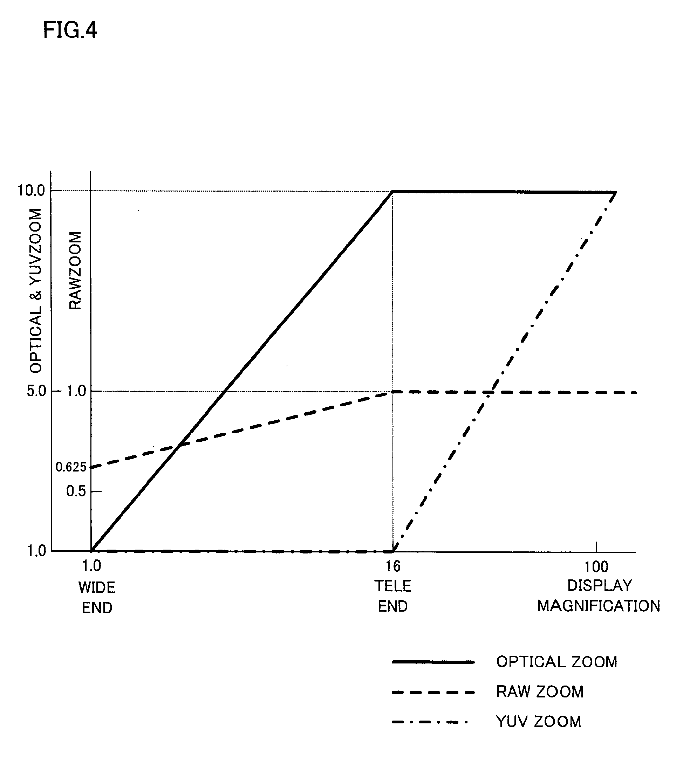

When a zoom button 38z on a key input device 38 is manipulated, the CPU 36 sets, as a target display magnification, a display magnification different from that at a current time point by a predetermined amount (=minute amount) in a desired direction, and with reference to a graph shown in Figure 4, calculates an optical zoom magnification, a RAW zoom magnification, and a YUV zoom magnification, corresponding to the set target display magnification. It is noted that data equivalent to values in the graph shown in Figure 4 are saved in a flash memory 54 as graph data GRD.

According to Figure 4, the optical zoom magnification indicates "1.0" when the zoom lens 12 is positioned at a wide end, and indicates "10.0" when the zoom lens 12 is positioned at a tele end Furthermore, the optical zoom magnification increases linearly as the zoom lens 12 moves from the wide end to the tele end, and is maintained at "10.0" in a range that the display magnification exceeds "16". The YUV zoom magnification is maintained at "1.0" in a range that the display magnification is equal to or less than "16", and increases linearly up to "10.0" in a range that the display magnification exceeds "16".

The RAW zoom magnification indicates "0.625" corresponding to the display magnification=1.0 (zoom lens 12=wide end), and indicates "1.0" corresponding to the display magnification=16 (zoom lens 12=tele end). Furthermore, the RAW zoom magnification increases linearly as the display magnification moves from "1.0" toward "16", and is maintained at "1.0" in a range that the display magnification exceeds "16".

Subsequent thereto, the CPU 36 sets the calculated optical zoom magnification, RAW zoom magnification, and YUV zoom magnification, to the driver 20a, the zoom circuit 24z, and the zoom circuit 44z, respectively, in order to execute the zoom process. Thereby, the through image having the target display magnification is outputted from the LCD monitor 48.

Thereafter, the CPU 36 changes settings of the motion detection areas MD 1 to MD9, the focus area FA, and the photometric/white balance area EWA so as to be adapted to the RAW zoom magnification set to the zoom circuit 24z. This improves the accuracy of the image-stabilizing process, the continuous AF process, and the AE/AWB process.

When a movie button 38m on the key input device 38 is manipulated, the CPU 36 applies a recording start command to an I/F 50 in order to start a moving-image recording process. The I/F 50 creates a moving image file within a recording medium 52, cyclically reads out the image data accommodated in the moving image area 42b, and writes the read-out image data into the moving image file within the recording medium 52. When the movie button 38m is manipulated again, a recording stop command is applied to the I/F 50. The I/F 50 ends reading-out of the image data from the moving image area 42b, and closes the moving image file of a write destination. Thereby, the moving image file is completed.

When a shutter button 38s on the key input device 38 is manipulated while the moving-image recording process is being executed, in order to execute a parallel-still-image recording process, the CPU 36 applies a still-image extracting command to the post-processing circuit 44 and also applies a still-image recording command to the I/F 50. The post-processing circuit 44 outputs one frame of image data representing an object scene image obtained at a time point when the shutter button 38s is manipulated, from a still-image output terminal S_OUT. The outputted image data is written into the still image area 42b of the SDRAM 42 through the memory control circuit 40. The I/F 50 reads out the image data accommodated in a still image area 42c, through the memory control circuit 40, and creates a still image file in which the read-out image data is contained, within the recording medium 52.

On the other hand, when the shutter button 38s is manipulated in a state where the moving-image recording process is interrupted, in order to execute an independent-still-image recording process, the CPU 36 sets the RAW zoom magnification and the YUV zoom magnification (both indicating "1.0") to the zoom circuits 24z and 44z, and applies the still-image processing command and the still-image recording command to the pre-processing circuit 24, the post-processing circuit 44, and the I/F 50, respectively.

Thereby, one frame of raw image data having a resolution of horizontal 3072 pixels × vertical 1728 pixels is outputted from the pre-processing circuit 24, and written into the raw image area 42a of the SDRAM 42.

The post-processing circuit 44 reads out the raw image data having the same resolution from the raw image area 42a, and outputs YUV-fomatted image data that is based on the read-out raw image data, from the still-image output terminal S_OUT. The outputted image data is written into the still image area 42c of the SDRAM 42 through the memory control circuit 40.

The I/F 50 reads out the image data accommodated in the still image area 42c through the memory control circuit 40, and creates a still image file in which the read-out image data is contained, within the recording medium 52. Upon completion of recording, the above-mentioned through-image process is resumed

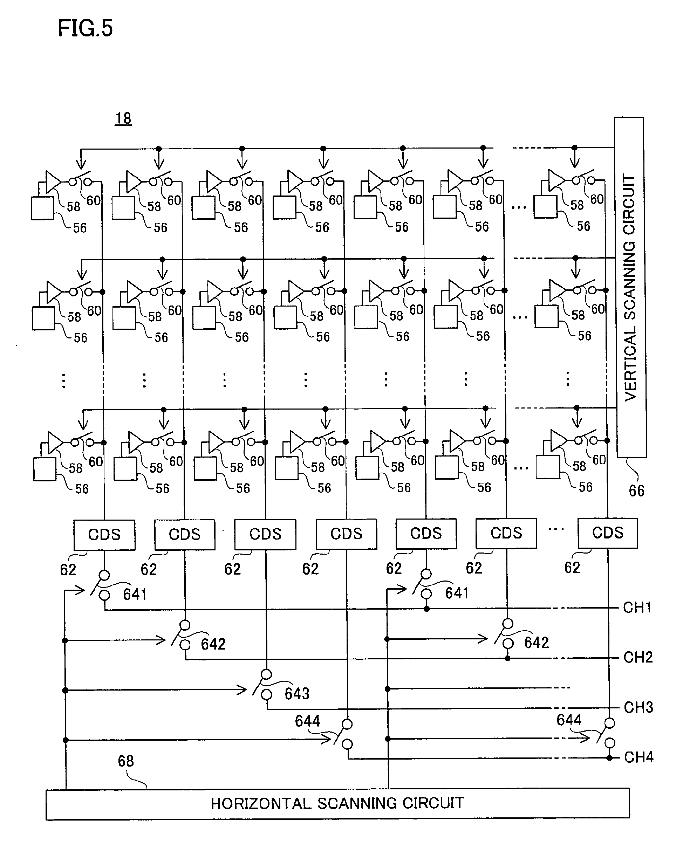

The image sensor 18 is configured as shown in Figure 5. The electric charges representing the object scene image are produced by a plurality of light-receiving elements 56, 56, ..., placed in a matrix. Each of the light-receiving elements 56 is equivalent to the above-described pixel. Each of light-receiving elements 56, 56, ..., lined up in a vertical direction is connected to a common CDS circuit 62 via an A/D converter 58 and a row selecting switch 60. The electric charge produced in each light-receiving element 56 is converted into 12-bit digital data by the A/D converter 58. A vertical scanning circuit 66 executes an operation for turning on/off each of the row selecting switches 60, 60, ..., for each pixel, in a raster scanning manner. Noise included in the pixel data that has undergone the row selecting switch 60 that is in a turned-on state is removed by the CDS circuit 62.

A column selecting switch 641 is allocated to a CDS circuit 62 in a (4N+1)th (N: 0,1, 2, 3, ...) column, a column selecting switch 642 is allocated to a CDS circuit 62 in a (4N+2)th column, a column selecting switch 643 is allocated to a CDS circuit 62 in a (4N+3)th column, and a column selecting switch 644 is allocated to a CDS circuit 62 in a (4N+4)th column.

A horizontal scanning circuit 68 turns on the column selecting switch 641 at a timing at which the row selecting switch 60 in a (4N+1)th column is turned on, turns on the column selecting switch 642 at a timing at which the row selecting switch 60 in a (4N+2)th column is turned on, turns on the column selecting switch 643 at a timing at which the row selecting switch 60 in a (4N+3)th column is turned on, and turns on the column selecting switch 644 at a timing at which the row selecting switch 60 in a (4N+4)th column is turned on.

As a result, the partial raw image data based on the electric charge produced in the light-receiving element 56 in the (4N+1)th column is outputted from the channel CH1, and the partial raw image data based on the electric charge produced in the light-receiving element 56 in the (4N+2)th column is outputted from the channel CH2. Also, the partial raw image data based on the electric charge produced in the light-receiving element 56 in the (4N+3)th column is outputted from the channel CH3, and the partial raw image data based on the electric charge produced in the light-receiving element 56 in the (4N+4)th column is outputted from the channel CH4.

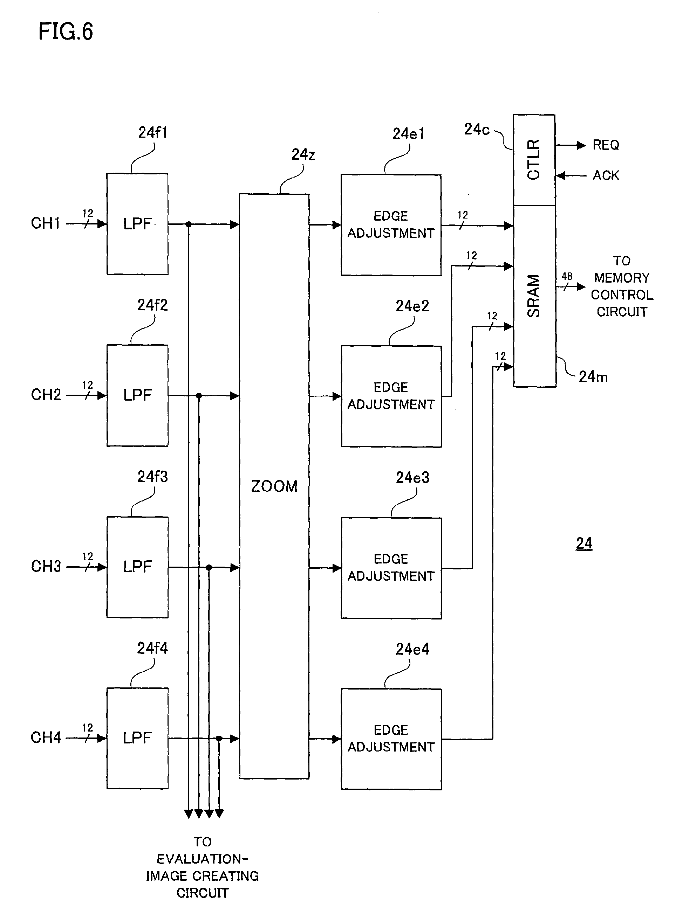

The pre-processing circuit 24 is configured as shown in Figure 6. The partial raw image data of the channel CH1 is applied to the zoom circuit 24z via an LPF 24f1, and the partial raw image data of the channel CH2 is applied to the zoom circuit 24z via an LPF 24f2. Moreover, the partial raw image data of the channel CH3 is applied to the zoom circuit 24z via an LPF 24f3, and the partial raw image data of the channel CH4 is applied to the zoom circuit 24z via an LPF 24f4.

The partial raw image data of four channels outputted from the LPF24fl to 24f4 is also outputted toward the evaluation-image creating circuits 26 and 28. Furthermore, the zoom circuit 24z performs a reduction zoom on the applied raw image data, i.e., the original image data, and outputs the raw image data having a reduced size, i.e., the zoom image data.

Out of the raw image data outputted from the zoom circuit 24z, the partial raw image data corresponding to the channel CH1 is applied to an edge adjusting circuit 24e1, and the partial raw image data corresponding to the channel CH2 is applied to an edge adjusting circuit 24e2. Moreover, the partial raw image data corresponding to the channel CH3 is applied to an edge adjusting circuit 24e3, and the partial raw image data corresponding to the channel CH4 is applied to an edge adjusting circuit 24e4.

The raw image data on which the edge adjustment is performed by the edge adjusting circuits 24e1 to 24e4 are later written into an SRAM 24m. A controller 24c issues a write request toward the memory control circuit 40 each time an amount of data accommodated in the SRAM 24m reaches a threshold value, and outputs the raw image data of a predetermined amount toward the memory control circuit 40 when an approval signal is sent back from an issuance destination.

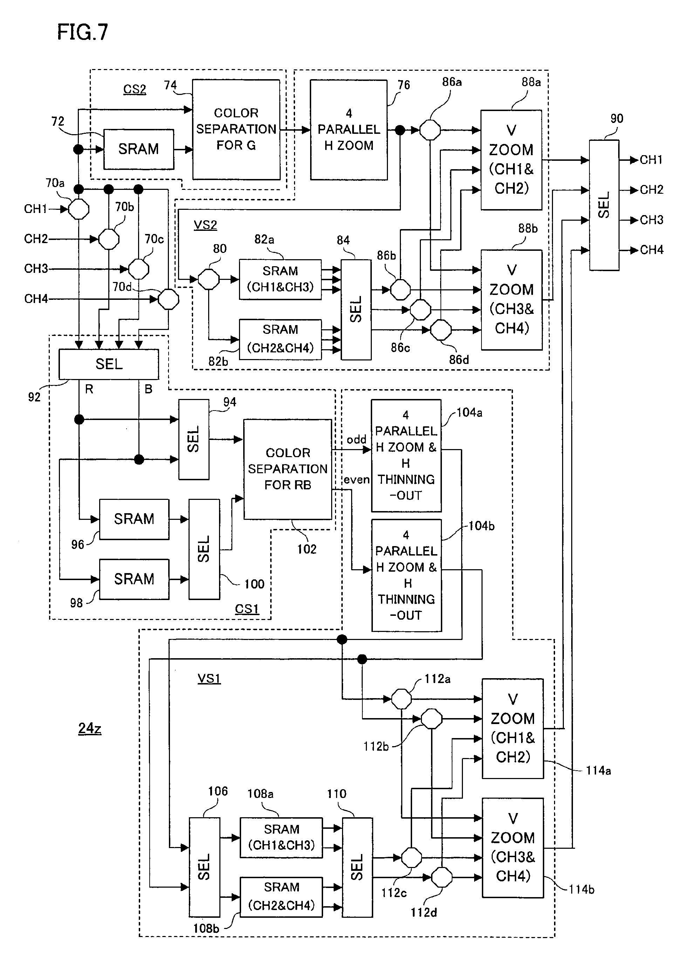

The zoom circuit 24z is configured as shown in Figure 7. The raw image data of the channel CH1 is applied to a divider 70a, and the raw image data of the channel CH2 is applied to a divider 70b. Moreover, the raw image data of the channel CH3 is applied to a divider 70c, and the raw image data of the channel CH4 is applied to a divider 70d.

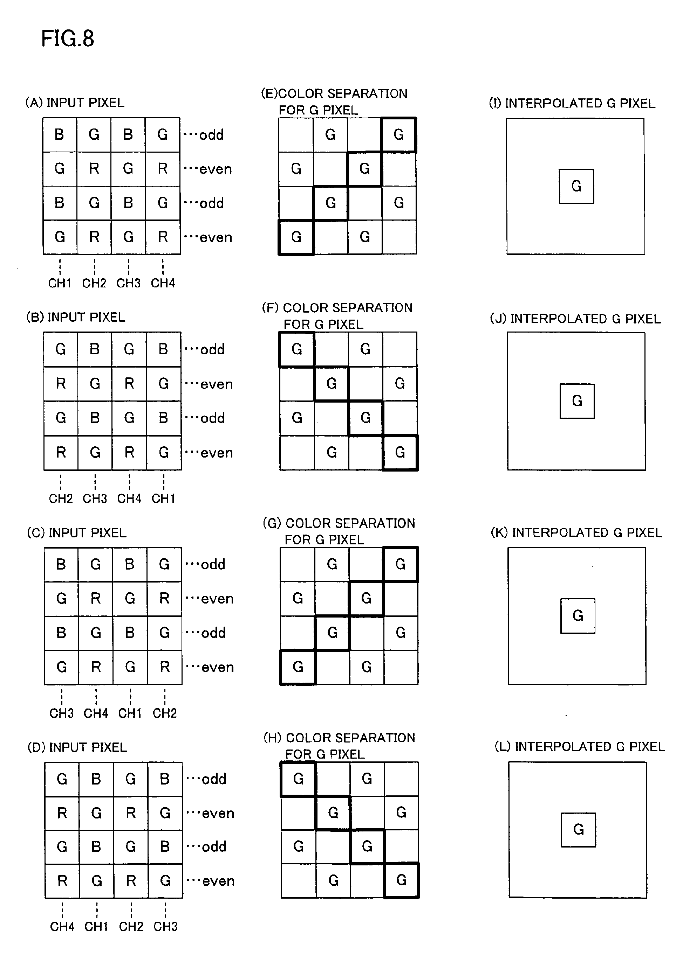

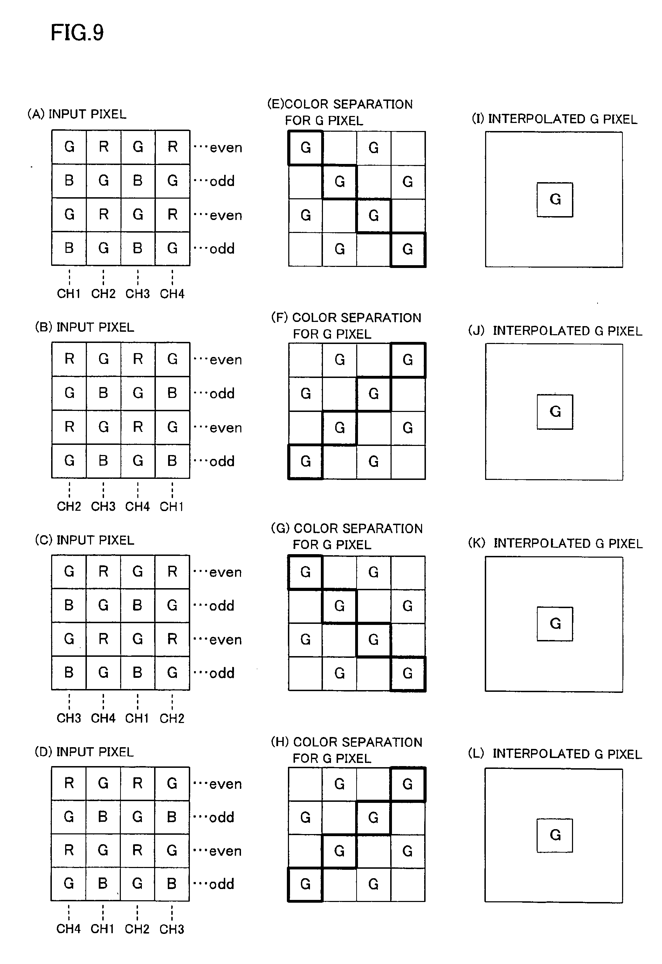

Because the image sensor 18 is driven as described above, the raw image data obtained via the channel CH1 to channel CH4 have pixel patterns shown in Figure 8(A) to Figure 8(D) and Figure 9(A) to Figure 9(D). That is, each raw image data of the channels CH1 and CH3 has a B pixel corresponding to a horizontal line at an odd number and a G pixel corresponding to a horizontal line at an even number. Moreover, each raw image data of the channels CH2 and CH4 has a G pixel corresponding to a horizontal line at an odd number and has an R pixel corresponding to a horizontal line at an even number.

Each of the dividers 70a and 70c applies the G pixel to a color separating circuit 74 and an SRAM 72configuring a color separating system CS2, and applies the B pixel to a selector 92 configuring a color separating system CS 1. Moreover, each of the dividers 70b and 70d applies the G pixel to the color separating circuit 74 and the SRAM 72, and applies the R pixel to the selector 92.

The color separating circuit 74 performs a linear, color interpolating process on the two G pixels directly inputted from the dividers 70a to 70d and the two G pixels read out from the SRAM 72, or the four G pixels read out from the SRAM 72, and outputs an interpolated G pixel created thereby toward a horizontal zoom circuit 76 configuring a zoom system VS2.

When a pixel pattern shown in Figure 8(A) is noticed, out of eight G pixels shown in Figure 8(E), the four G pixels surrounded by a bold line are subject to the color interpolating process, and at a position shown in Figure 8(I), the interpolated G pixel is created. When a pixel pattern shown in Figure 8(B) is noticed, out of eight G pixels shown in Figure 8(F), the four G pixels surrounded by a bold line are subject to the color interpolating process, and at a position shown in Figure 8(J), the interpolated G pixel is created.

Moreover, when a pixel pattern shown in Figure 8(C) is noticed, out of eight G pixels shown in Figure 8(G), the four G pixels surrounded by a bold line are subject to the color interpolating process, and at a position shown in Figure 8(K), the interpolated G pixel is created. When a pixel pattern shown in Figure 8(D) is noticed, out of eight G pixels shown in Figure 8(H), the four G pixels surrounded by a bold line are subject to the color interpolating process, and at a position shown in Figure 8(L), the interpolated G pixel is created

When a pixel pattern shown in Figure 9(A) is noticed, out of eight G pixels shown in Figure 9(E), the four G pixels surrounded by a bold line is subject to the color interpolating process, and at a position shown in Figure 9(I), the interpolated G pixel is created. When a pixel pattern shown in Figure 9(B) is noticed, out of eight G pixels shown in Figure 9(F), the four G pixels surrounded by a bold line are subject to the color interpolating process, and at a position shown in Figure 9(J), the interpolated G pixel is created.

Furthermore, when a pixel pattern shown in Figure 9(C) is noticed, out of eight G pixels shown in Figure 9(G), the four G pixels surrounded by a bold line are subject to the color interpolating process, and at a position shown in Figure 9(K), the interpolated G pixel is created When a pixel pattern shown in Figure 9(D) is noticed, out of eight G pixels shown in Figure 9(H), the four G pixels surrounded by a bold line are subject to the color interpolating process, and at a position shown in Figure 9(L), the interpolated G pixel is created.

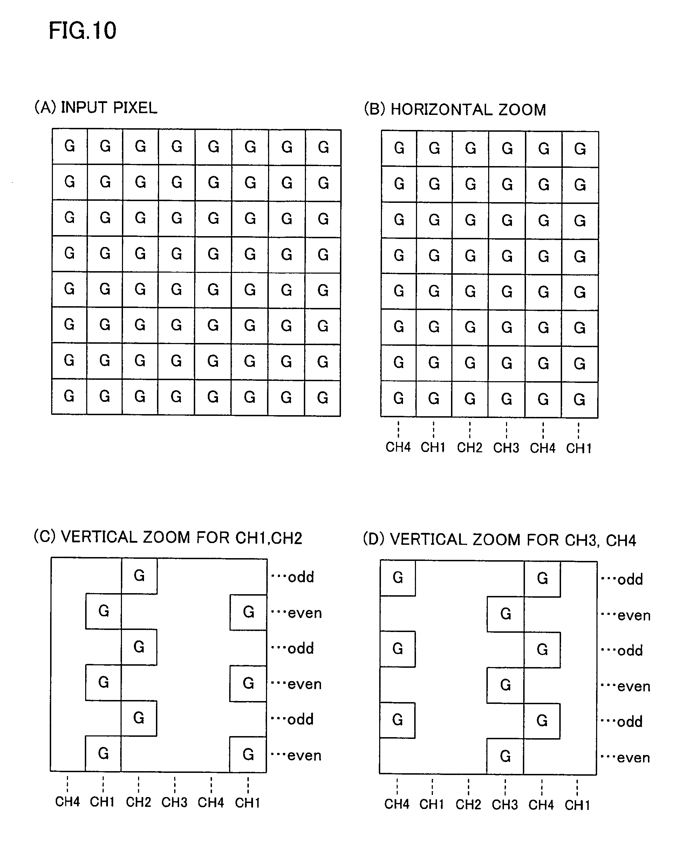

The horizontal zoom circuit 76 performs a horizontal zoom process (linear interpolating process in a horizontal direction) that is with reference to the RAW zoom magnification set by the CPU 36, on the interpolated G pixel continuously outputted from the color separating circuit 74, i.e., the interpolated image data having the G color information. When the interpolated G pixel on which the horizontal zoom process is performed is defined as an "H zoom G pixel", if the set RAW zoom magnification is 0.75 time, the H zoom G pixel is created as shown in Figure 10(B) based on the interpolated G pixel shown in Figure 10(A). The horizontal zoom circuit 76 executes the horizontal zoom process in four parallels corresponding to the channels CH1 to CH4 on an output side, and simultaneously outputs the four H zoom G pixels lined up in a horizontal direction.

The simultaneously outputted four H zoom G pixels are applied to a divider 80. The divider 80 writes the H zoom G pixels corresponding to the channels CH1 and CH3, into an SRAM 82a, and writes the H zoom G pixels corresponding to the channels CH2 and CH4, into an SRAM 82b.

When vertical zoom circuits 88a and 88b notice the horizontal line at an even number, a selector 84 reads out the three H zoom G pixels corresponding to the channel CH1 on the output side and the three H zoom G pixels corresponding to the channel CH3 on the output side from the SRAM 82a. Out of these, the three H zoom G pixels corresponding to the channel CH1 undergo dividers 86b to 86d to be inputted into the vertical zoom circuit 88a, and the three H zoom G pixels corresponding to the channel CH3 undergo the dividers 86b to 86d to be inputted into the vertical zoom circuit 88b.

When the vertical zoom circuits 88a and 88b notice the horizontal line at an odd number, the selector 84 furthermore reads out the three H zoom G pixels corresponding to the channel CH2 and the three H zoom G pixels corresponding to the channel CH4, from the SRAM 82b. The three H zoom G pixels corresponding to the channel CH2 undergo the dividers 86b to 86d to be inputted into the vertical zoom circuit 88a, and the three H zoom G pixels corresponding to the channel CH4 undergo the dividers 86b to 86d to be inputted into the vertical zoom circuit 88b.

The four H zoom G pixels simultaneously outputted from the horizontal zoom circuit 76 are also applied to a divider 86a When the vertical zoom circuits 88a and 88b notice the horizontal line at an even number, the divider 86a inputs the one H zoom G pixel corresponding to the channel CH1, into the vertical zoom circuit 88a, and inputs the one H zoom G pixel corresponding to the channel CH3, into the vertical zoom circuit 88b. When the vertical zoom circuits 88a and 88b notice the horizontal line at an odd number, the divider 86a inputs the one H zoom G pixel corresponding to the channel CH2, into the vertical zoom circuit 88a, and inputs the one H zoom G pixel corresponding to the channel CH4, into the vertical zoom circuit 88b.

When the line to be noticed is the horizontal line at an even number, the vertical zoom circuit 88a performs a vertical zoom process (linear interpolating process in a vertical direction) that is with reference to the RAW zoom magnification set by the CPU 36, on the four H zoom G pixels corresponding to the channel CH1 on the output side. When the line to be noticed is the horizontal line at an odd number, the vertical zoom circuit 88a further performs a similar vertical zoom process, on the four H zoom G pixels corresponding to the channel CH2 on the output side. From the vertical zoom circuit 88a, the one HV zoom G pixel based on the four H zoom G pixels that are subject to the vertical zoom process is outputted.

When the line to be noticed is the horizontal line at an even number, also the vertical zoom circuit 88b performs the vertical zoom process that is with reference to the RAW zoom magnification set by the CPU 36, on the four H zoom G pixels corresponding to the channel CH3 on the output side. When the line to be noticed is the horizontal line at an odd number, the vertical zoom circuit 88b further performs a similar vertical zoom process, on the four H zoom G pixels corresponding to the channel CH4 on the output side. Also from the vertical zoom circuit 88b, the one HV zoom G pixel is outputted based on the four H zoom G pixels that are subject to the vertical zoom process.

Therefore, when the set zoom magnification is 0.75 time, in the vertical zoom circuit 88a, HV zoom G pixels shown in Figure 10(C) are created based on horizontal zoom G pixels shown in Figure 10(B). Moreover, in the vertical zoom circuit 88b, based on horizontal zoom G pixels shown in Figure 10(B), HV zoom G pixels shown in Figure 10(D) are created. The zoom image data having the G color information is formed by the HV zoom pixels thus created.

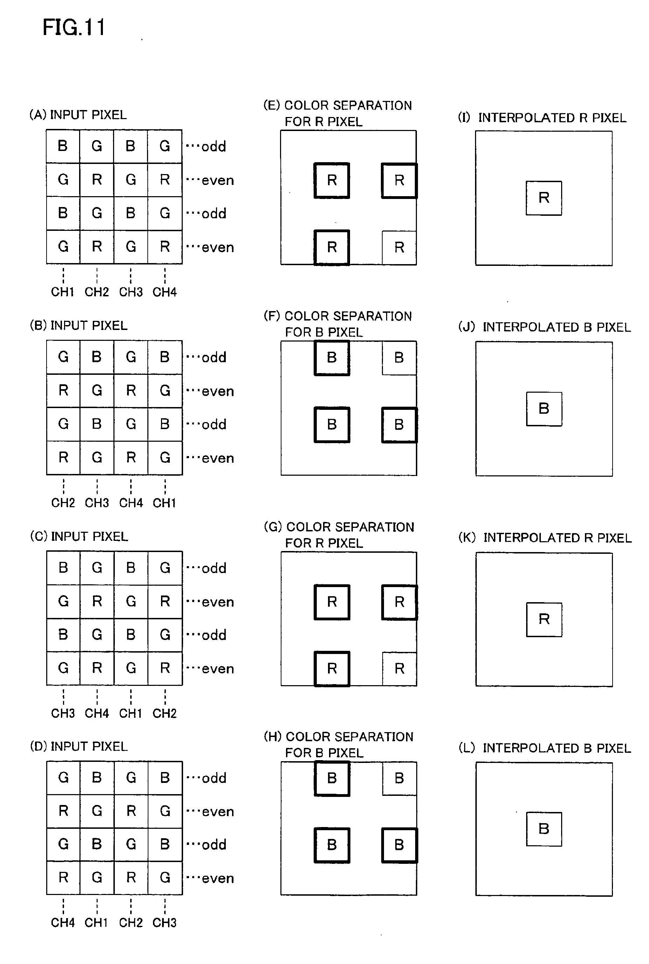

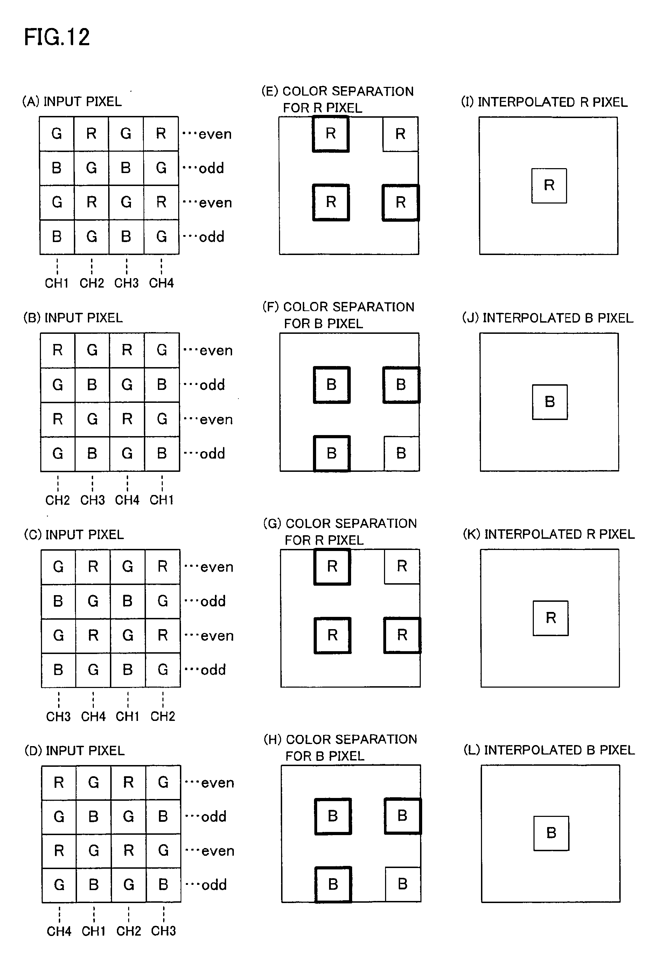

With reference to Figure 11(A) to Figure 11(D) and Figure 12(A) to Figure 12(D), the R pixel is detected from the channels CH2 and CH4 in the horizontal line at an even number, and the B pixel is detected from the channels CH1 and CH3 in the horizontal line at an odd number. The selector 92 applies the two R pixels detected from the horizontal line at an even number, to one input terminal of a selector 94 and an SRAM 96, and applies the two B pixels detected from the horizontal line at an odd number, to the other input terminal of the selector 94 and an SRAM 98.

The selector 94 selects the one input terminal when the two R pixels are outputted from the selector 92, and selects the other input terminal when the two B pixels are outputted from the selector 92. A selector 100 reads out the R pixel from the SRAM 96 corresponding to the color interpolating process of the R pixel, and reads out the B pixel from the SRAM 98 corresponding to the color interpolating process of the B pixel.

A color separating circuit 102 performs a linear color interpolating process on the two R pixels inputted from the selector 94 and the one R pixel inputted from the selector 100 or the three R pixels inputted from the selector 100 so as to create an interpolated R pixel. The color separating circuit 102 also performs a linear color-interpolating process on the two B pixels inputted from the selector 94 and the one B pixel inputted from the selector 100 or the three B pixels inputted from the selector 100 so as to create an interpolated B pixel.

Herein, the color interpolating process for creating the interpolated R pixel and the color interpolating process for creating the interpolated B pixel are alternately executed in a horizontal direction. In this embodiment, the interpolated R pixel is created corresponding to pixel patterns shown in Figure 11(A), Figure 11(C), Figure 12(A), and Figure 12(C). On the other hand, the interpolated B pixel is created corresponding to pixel patterns shown in Figure 11(B), Figure 11(D), Figure 12(B), and Figure 12(D).

To be described specifically, with respect to a pixel pattern shown in Figure 11(A), out of four R pixels shown in Figure 11(E), the three R pixels surrounded by a bold line are subject to the color interpolating process, and at a position shown in Figure 11(I), the interpolated R pixel is created. With respect to a pixel pattern shown in Figure 11(B), out of four B pixels shown in Figure 11(F), the three B pixels surrounded by a bold line are subject to the color interpolating process, and at a position shown in Figure 11(J), the interpolated B pixel is created.

Moreover, with respect to a pixel pattern shown in Figure 11(C), out of four R pixels shown in Figure 11(G), the three R pixels surrounded by a bold line are subject to the color interpolating process, and at a position shown in Figure 11(K), the interpolated R pixel is created. With respect to a pixel pattern shown in Figure 11(D), out of four B pixels shown in Figure 11(H), the three B pixels surrounded by a bold line are subject to the color interpolating process, and at a position shown in Figure 11(L), the interpolated B pixel is created

Furthermore, with respect to a pixel pattern shown in Figure 12(A), out of four R pixels shown in Figure 12(E), the three R pixels surrounded by a bold line are subject to the color interpolating process, and at a position shown in Figure 12(I), the interpolated R pixel is created. With respect to a pixel pattern shown in Figure 12(B), out of four B pixels shown in Figure 12(F), the three B pixels surrounded by a bold line are subject to the color interpolating process, and at a position shown in Figure 12(J), the interpolated B pixel is created.

With respect to a pixel pattern shown in Figure 12(C), out of four R pixels shown in Figure 12(G), the three R pixels surrounded by a bold line are subject to the color interpolating process, and at a position shown in Figure 12(K), the interpolated R pixel is created. With respect to a pixel pattern shown in Figure 12(D), out of four B pixels shown in Figure 12(H), the three B pixels surrounded by a bold line are subject to the color interpolating process, and at a position shown in Figure 12(L), the interpolated B pixel is created.

The interpolated image data having the R color information is formed by the interpolated R pixel thus created. Likewise, the interpolated image data having the B color information is formed by the interpolated B pixel thus created

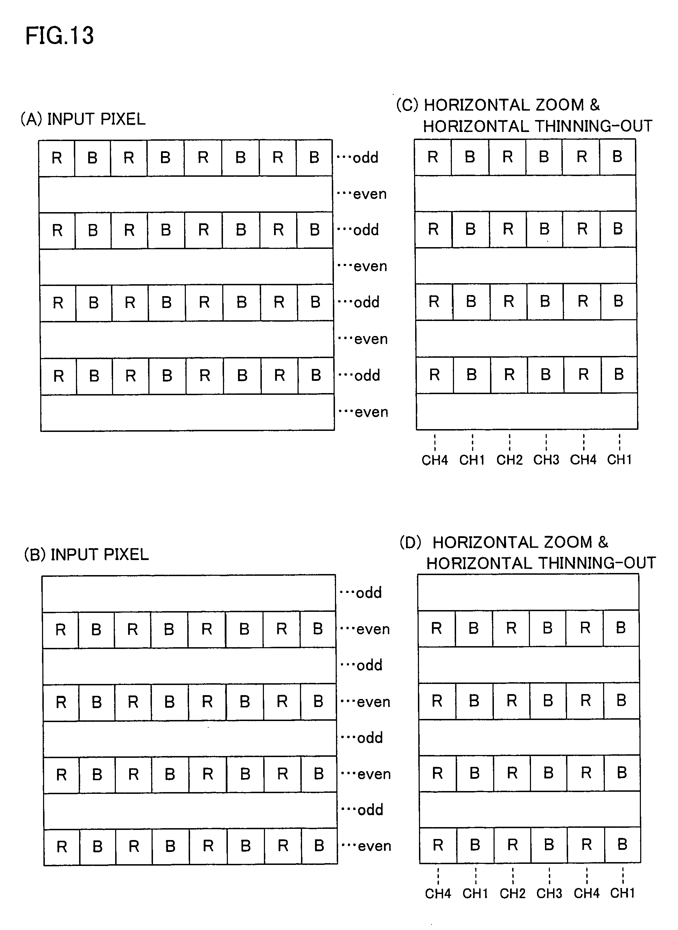

The interpolated R pixel and the interpolated B pixel corresponding to the horizontal line at an odd number are applied to a horizontal zoom & horizontal thinning-out circuit 104a configuring a zoom system VS1 (see Figure 13(A)). On the other hand, the interpolated R pixel and the interpolated B pixel corresponding to the horizontal line at an even number are applied to a horizontal zoom & horizontal thinning-out circuit 104b (see Figure 13(B)).

The horizontal zoom & thinning-out circuit 104a performs a horizontal zoom process that is with reference to the RAW zoom magnification set by the CPU 36 and a 1/2 thinning-out process, on an interpolated R pixel and an interpolated B pixel shown in Figure 13(A). Also the horizontal zoom & thinning-out circuit 104b performs a similar horizontal zoom process and 1/2 thinning-out process, on an interpolated R pixel and an interpolated B pixel shown in Figure 13(B). Hereinafter, the R pixel and the B pixel on which the horizontal zoom process and the 1/2 thinning-out process are performed are defined as an "H zoom R pixel" and an "H zoom B pixel", respectively.

Therefore, when the set zoom magnification is 0.75 time, an H zoom R pixel and an H zoom B pixel shown in Figure 13(C) are outputted from the horizontal zoom & thinning-cut circuit 104a, and an H zoom R pixel and an H zoom B pixel shown in Figure 13(D) are outputted from the horizontal zoom & thinning-out circuit 104b.

Herein, each of the horizontal zoom & thinning-out circuits 104a and 104b executes the horizontal zoom process and the 1/2 thinning-out process in four parallels corresponding to the channels CH1 to CH4, and simultaneously outputs the four H zoom R pixels/H zoom B pixels lined up in a horizontal direction.

The four H zoom R pixels/H zoom B pixels simultaneously outputted from the horizontal zoom & thinning-out circuit 104a are applied to one input terminal of the selector 106. Also, the four H zoom R pixels/H zoom B pixels simultaneously outputted from the horizontal zoom & thinning-out circuit 104b are applied to the other input terminal of the selector 106. The selector 106 writes the H zoom B pixels corresponding to the channels CH1 and CH3, into an SRAM 108a, and writes the H zoom R pixels corresponding to the channels CH2 and CH4, into an SRAM 108b.

When vertical zoom circuits 114a and 114b notice the horizontal line at an even number, a selector 110 reads out the two H zoom R pixels corresponding to the channel CH2 on the output side and the two H zoom R pixels corresponding to the channel CH4 on the output side, from the SRAM 108a Out of these, the two H zoom R pixels corresponding to the channel CH2 undergo the dividers 112c to 112d to be inputted into the vertical zoom circuit 114a, and the two H zoom R pixels corresponding to the channel CH4 undergo the dividers 112c to 112d to be inputted into the vertical zoom circuit 114b.

Moreover, when the vertical zoom circuits 114a and 114b notice the horizontal line at an odd number, the selector 110 reads out the two H zoom B pixels corresponding to the channel CH1, and reads out the two H zoom B pixels corresponding to the channel CH3, from the SRAM 108a The two H zoom B pixels corresponding to the channel CH1 undergo the dividers 112c to 112d to be inputted into the vertical zoom circuit 114a, and the two H zoom B pixels corresponding to the channel CH3 undergo the dividers 112c to 112d to be inputted into the vertical zoom circuit 114b.

The four H zoom R pixels/H zoom B pixels simultaneously outputted from the horizontal zoom & thinning-out circuit 104a are also applied to the divider 112a. Likewise, the four H zoom R pixels/H zoom B pixels simultaneously outputted from the horizontal zoom & thinning-out circuit 104b are applied also to the divider 112b.

When the vertical zoom circuits 114a and 114b notice the horizontal line at an even number, each of the dividers 112a and 112b inputs the one H zoom R pixel corresponding to the channel CH2, into the vertical zoom circuit 114a, and inputs the one H zoom R pixel corresponding to the channel CH4, into the vertical zoom circuit 114b. When the vertical zoom circuits 114a and 114b notice the horizontal line at an odd number, each of the dividers 112a and 112b inputs the one H zoom B pixel corresponding to the channel CH1, into the vertical zoom circuit 114a, and inputs the one H zoom B pixel corresponding to the channel CH3, into the vertical zoom circuit 114b.

When the line to be noticed is the horizontal line at an even number, the vertical zoom circuit 114a performs a vertical zoom process (linear interpolating process in a vertical direction) that is with reference to the RAW zoom magnification set by the CPU 36, on the four H zoom R pixels corresponding to the channel CH2. When the line to be noticed is the horizontal line at an odd number, the vertical zoom circuit 114a further performs a similar vertical zoom process, on the four H zoom B pixels corresponding to the channel CH1. From the vertical zoom circuit 114a, the one HV zoom R pixel based on the four H zoom R pixels that are subject to the vertical zoom process, or the one HV zoom B pixel based on the four H zoom B pixels that are subj ect to the vertical zoom process is outputted.

When the line to be noticed is the horizontal line at an even number, also the vertical zoom circuit 114b performs the vertical zoom process that is with reference to the RAW zoom magnification set by the CPU 36, on the four H zoom R pixels corresponding to the channel CH4. When the line to be noticed is the horizontal line at an odd number, the vertical zoom circuit 114b further performs a similar vertical zoom process, on the four H zoom B pixels corresponding to the channel CH3. Also from the vertical zoom circuit 114b, the one HV zoom R pixel based on the four H zoom R pixels that are subject to the vertical zoom process, or the one HV zoom B pixel based on the four H zoom B pixels that are subject to the vertical zoom process is outputted.

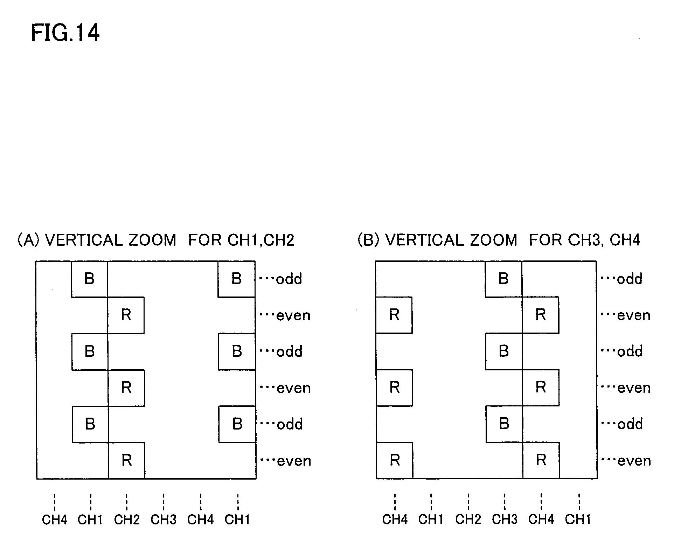

Therefore, when the set zoom magnification is 0.75 time, in the vertical zoom circuit 114a, based on the H zoom R pixel and the V zoom B pixel shown in Figure 13(C) and Figure 13(D), an HV zoom R pixel and an HV zoom B pixel shown in Figure 14(A) are created. Furthermore, in the vertical zoom circuit 114b, based on the H zoom R pixel and the V zoom B pixel shown in Figure 13(C) and Figure 13(D), an HV zoom R pixel and an HV zoom B pixel shown in Figure 14(B) are created. The zoom image data having the R color information is formed by the HV zoom R pixel thus created. Likewise, the zoom image data having the B color information is formed by the HV zoom B pixel thus created.

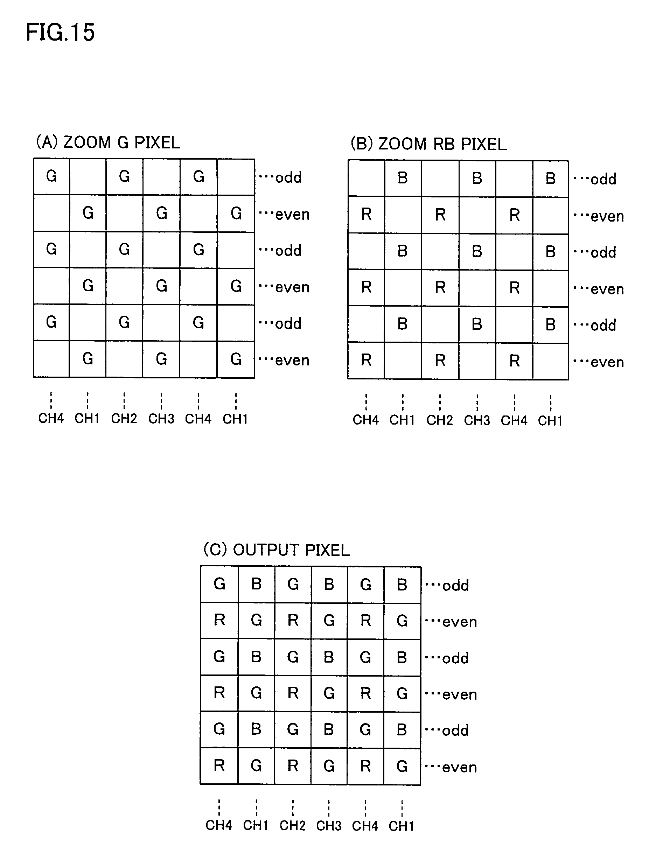

From the vertical zoom circuits 88a and 88b to the selector 90, the HV zoom G pixel shown in Figure 15(A) is applied. Also, from the vertical zoom circuits 116a and 116b to the selector 90, an HV zoom R pixel and an HV zoom B pixel shown in Figure 15(B) are applied. The selector 90 sorts out the applied HV zoom G pixel, HV zoom R pixel, and HV zoom B pixel, depending on each channel. As a result, the RAW data having a pixel pattern shown in Figure 15(C), i.e., the zoom image data, is obtained.

As is seen from the above description, the dividers 70a to 70d fetch the original image in which a plurality of original pixels, each of which has any one of R, G, and B, are arrayed in a Bayer manner (predetermined manner). The color separating systems CS1 and CS2 performs a color interpolating process on the fetched raw image so as to create the interpolated image formed by the plurality of interpolated pixels, each of which has the two colors. The zoom systems VS1 and VS2 performs a zoom process on the interpolated image created by the color separating systems CS 1 and CS2 so as to create a zoom image in which a plurality of zoom pixels are arrayed in a Bayer manner, each of which has any one of R, G, and B.

Because the interpolated image is created by the color interpolating process for the original image, the interpolated image has more color information than the original image does. The zoom image is created by the zoom process for such an interpolated image. Thereby, the quality of the zoom image is improved

Moreover, the zoom image has the same color array as that of the original image, and each pixel forming the interpolated image has one portion of the colors. The interpolated image is created by the color interpolating process for the original image, and the zoom image is created by the zoom process for the interpolated image. Thereby, it becomes possible to inhibit a circuit scale.

It is noted that in this embodiment, an image in which a plurality of pixels, each of which has R, G, or B, are arrayed in a Bayer manner is assumed as the original image. However, it may be optionally possible to adopt four colors obtained by adding E (emerald) to R, G, and B (or three or more colors different from these) as the color of each pixel, and also possible to adopt an array different from the Bayer manner as the color array.

Moreover, in this embodiment, by the color interpolating process of the color separating systems CS 1 and CS2, the two colors (i.e., two colors of G and R or the two colors of G and B) are allocated to each pixel forming the interpolated image data. However, the number of colors allocated to each pixel by the color interpolating process may be appropriately changed in a range which is two or more and falls below the number of colors adopted by the original image. Likewise, the types of colors allocated to each pixel by the color interpolating process may also be appropriately changed according to the types of colors adopted by the original image.

Furthermore, in this embodiment, the four output channels are arranged in the image sensor, and the four pixels lined up in a horizontal direction are simultaneously outputted However, the number of horizontal pixels to be simultaneously outputted may be optionally different from "4" as long as the number is equal to or more than "2".

Moreover, in this embodiment, the interpolated R pixel and the interpolated B pixel corresponding to the horizontal line at an odd number are applied to the horizontal zoom & horizontal thinning-out circuit 104a, and at the same time, the interpolated R pixel and the interpolated B pixel corresponding to the horizontal line at an even number are applied to the horizontal zoom & horizontal thinning-out circuit 104b. However, instead thereof, the interpolated R pixel may be optionally applied to the horizontal zoom & horizontal thinning-out circuit 104a, and at the same time, the interpolated B pixel may be optionally applied to the horizontal zoom & horizontal thinning-out circuit 104b. However, in this case, the configuration of the horizontal zoom & horizontal thinning-out circuits 104a and 104b at a later stage needs to be changed as well.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An image processing apparatus, comprising:
a fetcher which fetches an original image in which a plurality of original pixels, each of which has any one of M (M: an integer of 3 or more) colors, are arrayed in a predetermined manner,
an interpolated image creator which performs a color interpolating process on the original image fetched by said fetcher so as to create an interpolated image formed by a plurality of interpolated pixels, each of which has N (N: an integer of 2 or more and less than the M) colors; and
a zoom image creator which performs a zoom process on the interpolated image created by said interpolated image creator so as to create a zoom image in which a plurality of zoom pixels, each of which has any one of the M colors, are arrayed in the predetermined manner.

2. An image processing apparatus according to claim 1, wherein an array of the predetermined manner includes a first partial array to which a first original pixel column intermittently having original pixels of a first color and a second pixel column intermittently having original pixels of a second color are allocated in a predetermined order, and said interpolated pixel creator includes a first interpolated-image creator which creates a first interpolated image to which a first interpolated-pixel column continuously having interpolated pixels of the first color and a second interpolated-pixel column continuously having interpolated pixels of the second color are allocated in the predetermined order, based on the original pixels of the first color and the original pixels of the second color.

3. An image processing apparatus according to claim 2, wherein said zoom image creator includes a first zoom-image creator which creates a first zoom image having the first partial array based on the first interpolated image created by said first interpolated-image creator.

4. An image processing apparatus according to claim 2, wherein the array of the predetermined manner includes a second partial array intermittently having original pixels of a third color in a column direction and a row direction, and said interpolated image creator further includes a second interpolated-image creator which creates a second interpolated image to which the interpolated pixels of the third color are continuously allocated in the column direction and the row direction, based on the original pixels of the third color.

5. An image processing apparatus according to claim 4, wherein said zoom image creator includes a second zoom-image creator which creates a second zoom image having the second partial array based on the second interpolated image created by said second interpolated-image creator.

6. An image processing apparatus according to claim 2, wherein each of the first original pixel column and the second original pixel column is equivalent to a column extending in a vertical direction, said fetcher simultaneously fetches P (P: an integer of 2 or more) original pixels continued in a horizontal direction, and said zoom image creator includes a horizontal zoom processor which performs a horizontal zoom process in a parallel manner, on the P interpolated pixels continued in the horizontal direction.

7. An image processing apparatus according to claim 1, further comprising an imager which has an imaging surface capturing an object scene and which repeatedly outputs the original image.

8. An image processing apparatus according to claim 1, wherein the M colors are equivalent to three primary colors, and the array of the predetermined manner is equivalent to a Bayer array.

9. An image processing apparatus according to claim 1, further comprising a convertor which converts the zoom image created by said zoom image creator, into an image in which each pixel has all the M colors.
